# EUROPEAN PATENT APPLICATION

(11) **EP 4 700 927 A1**
(43) Date of publication of application: **25.02.2026**
(21) Application number: 25196736.0
(22) Date of filing: 19.08.2025
(51) Int. Cl.: H01M 50/107, H01M 50/152, H01M 50/184, H01M 50/186, H01M 50/213, H01M 50/24, H01M 50/296, H01M 50/342, H01M 50/562, H01M 50/571, H01M 50/167, H01M 50/291, H01M 50/293, H01M 50/502

(54) **BATTERY PACK**

(30) Priority: 20.08.2024 KR 20240111524
(71) Applicant: SAMSUNG SDI CO., LTD., Yongin-si, Gyeonggi-do 17084 (KR)
(72) Inventor: OH, Seo Taek, 16678 Suwon-si (KR)
(74) Representative: Meissner Bolte Partnerschaft mbB

(57) **Abstract**

A battery pack includes a battery cell including at least one terminal portion, a battery case accommodating the battery cell, a tab plate that is in contact with the at least one terminal portion, the tab plate including nickel, and an adhesive tape between the tab plate and the battery cell.

## Description

### CROSS-REFERENCE TO RELATED APPLICATION

The present application claims priority and the benefit of Korean Patent Application No. 10-2024-0111524, filed on August 20, 2024, in the Korean Intellectual Property Office, the entire disclosure of which is incorporated herein by reference.

### BACKGROUND

### 1. Field

The present invention relates to a battery pack.

### 2. Description of the Related Art

Recently, with the rapid spread of electronic devices that use batteries, such as cellular phones, laptop computers and electric vehicles, the demand for secondary batteries with high energy density and high capacity is rapidly increasing. Accordingly, research and development to improve the performance of lithium secondary batteries is underway.

A lithium secondary battery is a battery including a positive electrode and a negative electrode, which include an active material capable of intercalation and deintercalation of lithium ions, and an electrolyte. The lithium secondary battery generates electrical energy through oxidation and reduction reactions when lithium ions are intercalated/deintercalated into/from the positive electrode and the negative electrode.

The information disclosed in the description of the related art of the present invention is only for improving the understanding of the background of the present invention, and thus may include information that does not constitute the related art.

### SUMMARY OF THE INVENTION

The present invention concerns a battery pack including a battery cell including at least one terminal portion, a battery case accommodating the battery cell, a tab plate in contact with the at least one terminal portion, the tab plate including nickel. and an adhesive tape between the tab plate and the battery cell.

The tab plate may include nickel in an amount of 95 wt% or more, based on 100 wt% of the tab plate.

The adhesive tape may be impermeable to an electrolyte and moisture.

The adhesive tape may be a single-sided or double-sided adhesive tape, the adhesive tape being attached to the battery cell and surrounding an outer circumferential surface of the terminal portion.

The adhesive tape may be ring-shaped or dot-shaped.

The battery cell may include a cylindrical case having a body portion, a bottom portion connected to a first side of the body portion, a beading portion bent toward the inside of the body portion, and a crimping portion a second side of the body portion, an electrode assembly accommodated in the cylindrical case, and a cap assembly sealing the cylindrical case at the second side of the body portion, the terminal portion being at a top of the cap assembly.

The adhesive tape may be between the tab plate and the crimping portion.

The adhesive tape may be ring-shaped, an inner circumferential surface of the adhesive tape being closer to the terminal portion than to one end of the crimping portion.

An inner circumferential surface of the adhesive tape may be at least 5 mm away from the terminal portion.

The battery cell further may include a tubing surrounding the cylindrical case, the adhesive tape being between the tab plate and the tubing.

One end of the tubing may be between one end of the crimping portion and the tab plate.

The battery pack may further include a washer between the crimping portion and the tubing.

The cap assembly may include a cap up having the terminal portion, a safety vent under the cap up, a cap down under the safety vent, and a gasket insulating the cylindrical case, one end of the gasket, which is far from the electrode assembly, being inclined upward.

The battery cell may include an electrolyte, the electrolyte including at least one of ethylene carbonate, ethyl methyl carbonate, and dimethyl carbonate.

### DETAILED DESCRIPTION OF THE DRAWINGS

Features will become apparent to those of skill in the art by describing in detail exemplary embodiments with reference to the attached drawings, in which:
FIGS. 1 and 2 are exploded perspective views of a battery pack according to an embodiment of the present invention;
FIG. 3 is a partial schematic view of a battery cell according to an embodiment of the present invention;
FIG. 4 is a partial cross-sectional view of a battery cell according to an embodiment of the present invention;
FIG. 5 is a partially enlarged cross-sectional view of an assembly of a battery cell and a tab plate in a battery pack according to an embodiment of the present invention;
FIGS. 6 to 8 are top plan views of a battery cell including a tape according to an embodiment of the present invention;
FIG. 9 is a partially enlarged cross-sectional view of an assembly of a battery cell and a tab plate in a battery pack according to another embodiment of the present invention; and
FIGS. 10 and 11 are diagrams for illustrating a vehicle including a battery pack according to an embodiment of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

In addition, when used herein, the term "comprise" or "include" and/or "comprising" or "including" specify the presence of the mentioned shapes, numbers, steps, operations, members, elements and/or groups thereof, and do not exclude the presence or addition of one or more other shapes, numbers, operations, members, elements and/or groups.

The statement that two objects for comparison are "the same" means that the two are "substantially the same." Therefore, "substantially the same" may include a deviation that is considered low in the art, for example, a deviation of less than 5%. Additionally, uniformity of a parameter in a certain area may be the uniformity from an average perspective.

Although the terms "first," "second," etc. are used to describe various components, these components are not limited thereto. These terms are used to distinguish one component from another component, and unless specifically stated to the contrary, a first component may be a second component.

Throughout the specification, unless otherwise stated, each component may be singular or plural.

When any component is said to be disposed on the "upper surface (or lower surface)" of a component or "on (or under)" a component, this not only means that any component is disposed in contact with the upper (or lower) surface of the component, but also means that other components may be interposed between the component and any component disposed on (or under) the component.

When a component is described as being "connected," "coupled," or "linked" to another component, the components may be directly connected or linked to each other, but it should be understood that other components may be "interposed" between each component, or that each component may be "connected," "coupled," or "linked" through other components. When a part is said to be "electrically connected" to another part, this includes not only the case where it is directly connected, but also the case where it is connected with another element therebetween.

In the specification, "A and/or B" means A, B, or A and B, unless specifically stated to the contrary. In other words, "and/or" includes all or any combination of a plurality of listed components. In the specification, "C to D" means C or more and D or less, unless specifically stated to the contrary.

The terms used in this specification are for describing embodiments of the present invention and are not intended to limit the present invention.

The battery pack according to an embodiment of the present invention includes a battery cell including at least one terminal portion, a battery case accommodating the battery cell, and a tab plate that is in contact with the terminal portion, wherein the tab plate includes nickel, and an adhesive tape is located between the tab plate and the battery cell.

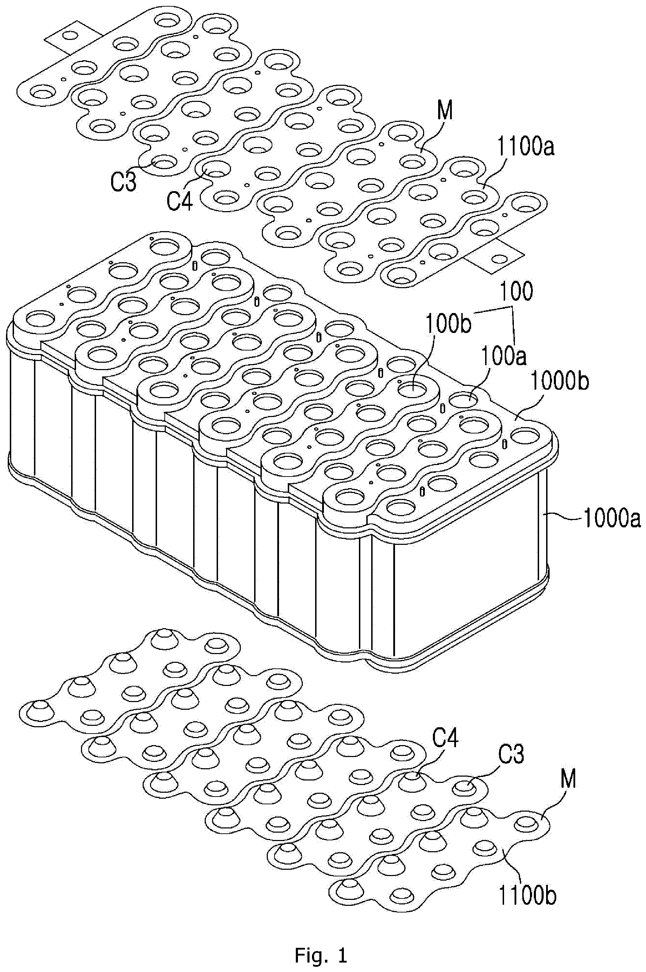

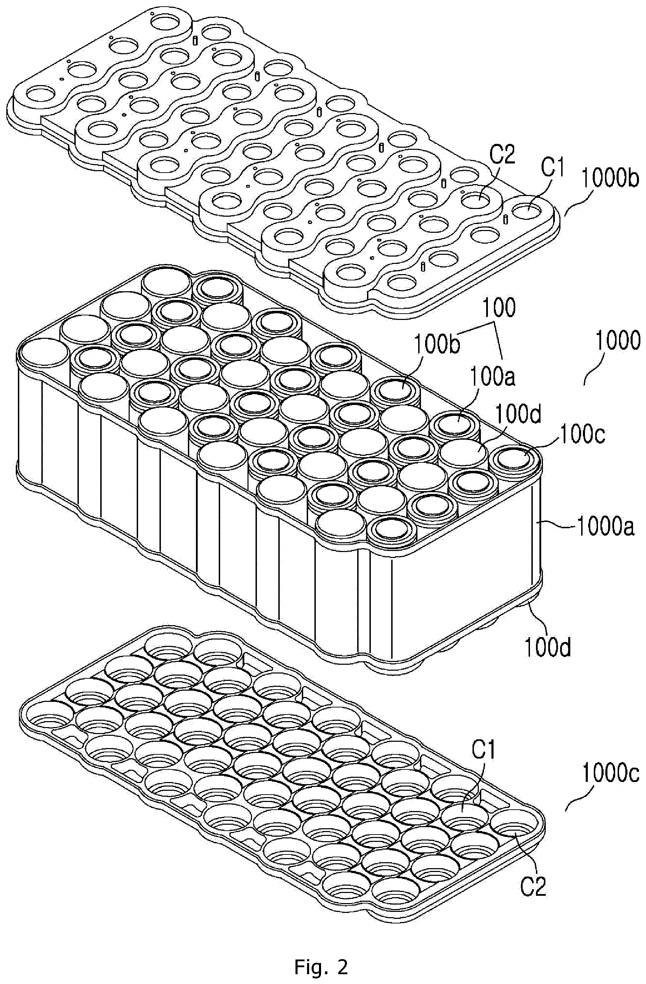

FIGS. 1 and 2 are exploded perspective views of a battery pack according to an embodiment of the present invention. FIG. 1 is a view illustrating only tab plates separated from a battery case that is attached to covers, and FIG. 2 is a view illustrating tab plates attached to covers, which are together separated from a battery case. In the drawings, for convenience of illustration, components such as a busbar, a cooling unit and an external terminal for electrical connection of batteries are omitted.

As shown in FIGS. 1 and 2, the battery pack includes battery cells 100a and 100b, a battery case 1000 that accommodates the battery cells 100a and 100b, and tab plates 1100a and 1100b that electrically connect the battery cells 100a and 100b.

The battery case 1000 may include a middle case 1000a and a first cover 1000b and a second cover 1000c that are coupled to the middle case 1000a, e.g., the middle case 1000a may be interposed between the first and second covers 1000b and 1000c that are facing each other. The battery case 1000 may be formed in a three-part form of the middle case 1000a, the first cover 1000b, and the second cover 1000c, and may provide a space by combining the middle case 1000a, the first cover 1000b, and the second cover 1000c (e.g., a volumetric space enclosed by the middle case 1000a, the first cover 1000b, and the second cover 1000c).

The battery cells 100a and 100b may be accommodated in the space provided by the middle case 1000a. The battery cells 100a and 100b may be disposed in an offset form (e.g., rows of first battery cells 100a may be offset along the row direction relative to rows of second battery cells 100b).

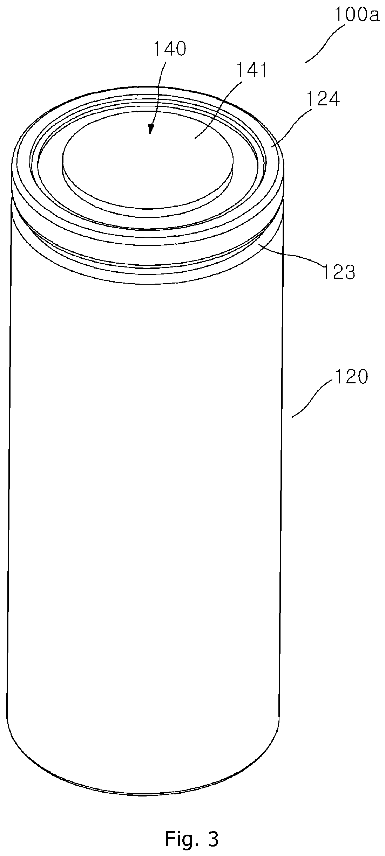

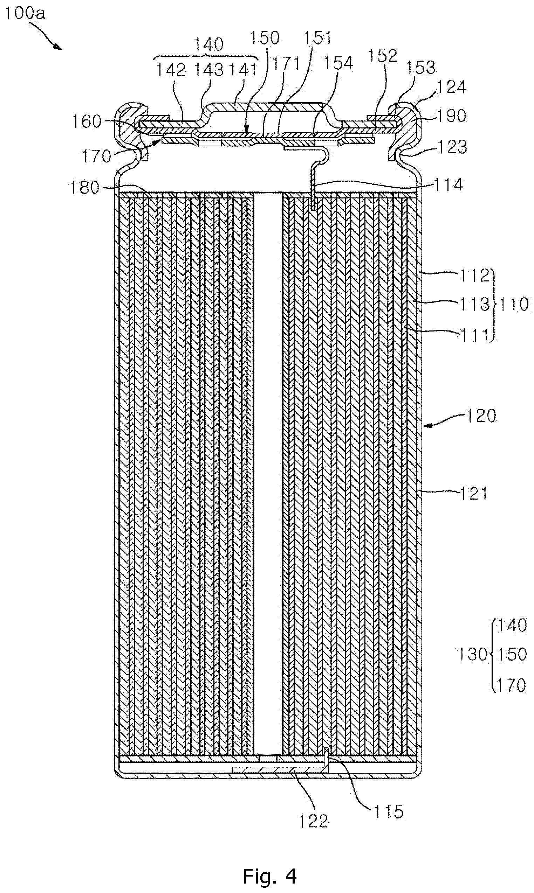

The first cover 1000b may cover the terminal portion of the first battery cell 100a, and the second cover 1000c may cover the terminal portion of the second battery cell 100b. The terminal portion is explained with reference to FIGS. 3 and 4 below.

The first cover 1000b and the second cover 1000c may have a first terminal hole C1 and a second terminal hole C2 to expose a first terminal portion 100c and a second terminal portion 100d of each battery cell, respectively. Battery cells may be electrically connected through the first terminal portion 100c and the second terminal portion 100d of each battery cell, which are exposed from the first terminal hole C1 and the second terminal hole C2. The first terminal portion 100c and the second terminal portion 100d may have the same configuration as a terminal portion 141 and a bottom portion 122in FIG. 3, respectively.

The tab plate may include a first tab plate 1100a and a second tab plate 1100b. The first tab plate 1100a that is in contact with the terminal portion of the first battery cell 100a may be disposed on the first cover 1000b. The second tab plate 1100b that is in contact with the terminal portion of the second battery cell 100b may be disposed on the second cover 1000c.

The first tab plate 1100a may include a flat main body M disposed on the first cover 1000b and a first contact portion C3 and a second contact portion C4 that protrude to different depths from the main body M toward the first terminal portion and the second terminal portion of the battery cells. The second tab plate 1100b may include the flat main body M disposed on the second cover 1000c and the first contact portion C3 and the second contact portion C4 that protrude to different depths from the main body M toward the first terminal portion and the second terminal portion of the battery cells. For example, referring to FIG. 1, the first and second contact portions C3 and C4 in the first tab plate 1100a and the first and second contact portions C3 and C4 in the second tab plate 1100b protrude toward each other, respectively.

FIG. 3 is a schematic perspective view of the first battery cell 100a, and FIG. 4 is a partial cross-sectional view of the first battery cell 100a. The structure of the second battery cell 100b is identical or substantially identical to that of the first battery cell 100a.

As shown in FIGS. 3 and 4, each of the first and second battery cells 100a and 100b includes an electrode assembly 110, a case 120 accommodating the electrode assembly 110 and an electrolyte, a cap assembly 130 that is coupled to the opening of the case 120 to seal the case 120, and an upper insulating plate 180 located between the electrode assembly 110 and the cap assembly 130 in the case 120.

The electrode assembly 110 may include a separator 113 and a first electrode 111 and a second electrode 112 with the separator 113 interposed therebetween, and may be wound in a jelly-roll shape.

The first electrode 111 may include a first substrate and a first active material layer located on the first substrate. A first lead tab 114 may extend outward from a first uncoated portion of the first substrate where the first active material layer is not located, and the first lead tab 114 may be electrically connected to the cap assembly 130.

The second electrode 112 may include a second substrate and a second active material layer located on the second substrate. A second lead tab 115 may extend outward from a second uncoated portion of the second substrate where the second active material layer is not located, and the second lead tab 115 may be electrically connected to the case 120. The first lead tab 114 and the second lead tab 115 may extend in opposite directions.

The first electrode 111 may serve as a positive electrode. In this case, the first substrate may be composed of, e.g., aluminum foil, and the first active material layer may include, e.g., a transition metal oxide.

The second electrode 112 may serve as a negative electrode. In this case, the second substrate may be composed of, e.g., copper foil or nickel foil, and the second active material layer may include, e.g., graphite.

The separator 113 serves to prevent short circuits between the first electrode 111 and the second electrode 112 while allowing the movement of lithium ions. The separator 113 may be composed of, e.g., a polyethylene film, a polypropylene film, a polyethylene-polypropylene film, and so on.

The case 120 may accommodate the electrode assembly 110 and the electrolyte, and along with the cap assembly, may form the outer shape of the secondary battery. The case 120 may include a body portion 121 with a roughly cylindrical shape and a bottom portion 122 connected to one side of the body portion 121. For example, the case 120 may be composed of nickel-plated iron.

A beading portion 123 that is deformed toward the inside may be located in the body portion 121, and a crimping portion 124 that is bent toward the inside may be located at one end of the open side of the body portion 121. The beading portion 123 may suppress the movement of the electrode assembly 110 in the case 120 and may facilitate the fixation of a gasket 190 and the cap assembly 130. The crimping portion 124 may firmly fix the cap assembly 130 by pressing the edge of the cap assembly 130 through the gasket 190.

The cap assembly 130 may be fixed to the inside of the crimping portion 124 through the gasket 190 to seal the case. The cap assembly 130 may include a cap up 140, a safety vent 150, and a cap down 170. However, the cap assembly 130 may be modified in various ways.

The cap up 140 may be located on the uppermost side of the cap assembly 130. The cap up 140 may include a terminal portion 141 that protrudes convexly upward and is connected to an external circuit, a coupling portion 142 located on the outer circumferential surface of the terminal portion 141, and a connecting portion 143 that connects the terminal portion 141 and the coupling portion 142. The cap up 140 may have an outlet located around the terminal portion 141 to discharge gas.

The safety vent 150 may be located under the cap up 140. The safety vent 150 may include a protrusion 151 that protrudes convexly downward and is connected to a subplate, a vent contact portion 152 that is located outside of (e.g., peripheral with respect to) the protrusion 151 and is in contact with the coupling portion 142 of the cap up 140, at least one notch 154 located around the protrusion 151, and a vent extension portion 153 that is bent from the protrusion 151 (e.g., from the vent contact portion 152) and extends to cover the upper surface of the cap up 140 (e.g., so the coupling portion 142 at the edge of the cap up 140 may be between the vent contact portion 152 and the vent extension portion 153 of the safety vent 150).

When gas is generated due to overcharging or abnormal operation of the secondary battery, the protrusion 151 of the safety vent 150 may be deformed upward due to pressure and separated from the subplate, while the safety vent 150 may be cut along the notch 154. The safety vent 150 cut along the notch 154 may prevent the secondary battery from exploding by releasing gas to the outside.

The cap down 170 may be located under the safety vent 150. A first opening for exposing the protrusion 151 of the safety vent 150 and a second opening for discharging gas may be located in the cap down 170. An insulating member 160 (e.g., an insulator) may be interposed between the safety vent 150 and the cap down 170 to insulate the safety vent 150 and the cap down 170.

The subplate 171 may be located under the cap down 170. The subplate may be fixed to the lower surface of the cap down 170 to block the first opening of the cap down 170, and the protrusion 151 of the safety vent 150 may be fixed to the subplate 171. The first lead tab 114 extending from the electrode assembly 110 may be fixed to the subplate 171. Thus, the cap up 140, the safety vent 150, the cap down 170, and the subplate 171 may be electrically connected to the first electrode 111 of the electrode assembly 110.

An upper insulating plate 180 may be positioned in contact with the electrode assembly 110 under the beading portion 123, and the upper insulating plate 180 may have a tab opening through which the first lead tab 114 extends. The cap assembly 130, which is electrically connected to the first electrode 111 by the first lead tab 114, faces the electrode assembly 110 with the upper insulating plate 180 interposed therebetween, and may be insulated from the electrode assembly 110 due to the upper insulating plate 180.

The case 120 may have various shapes, such as a cylindrical shape and a pouch shape. In addition, the case 120 may be composed of a metal such as aluminum, an aluminum alloy or nickel-plated steel, or a laminated film or plastic constituting a pouch.

The battery cell according to an embodiment of the present invention includes an adhesive tape 300 interposed between the battery cell and the tab plate. The tab plate and the adhesive tape may prevent corrosion of the tab plate of the battery pack (e.g., potentially caused by a reaction between a residual electrolyte of the battery cell and moisture caused by condensation occurring when the external environment changes) and may prevent short circuits between the battery cell and the tab plate of the battery pack.

In detail, when a battery cell is repeatedly used and does not include the adhesive tape, according to the present invention, the electrolyte of the battery cell may remain in the crimping portion 124. For example, the electrolyte may remain between the crimping portion 124 and the gasket 190.

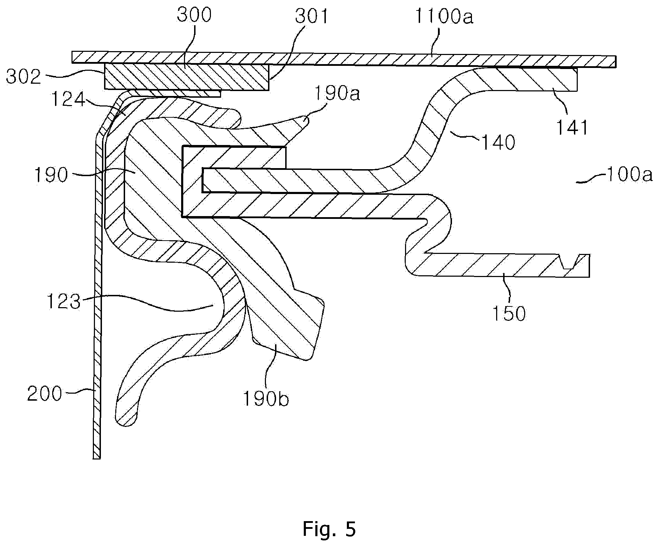

In particular, referring to FIG. 5, if a battery cell did not include the adhesive tape 300, among ends 190a and 190b of the gasket 190 in the battery cell, when one end 190a that is far from the electrode assembly is inclined upward, the electrolyte could move along the interface between the crimping portion 124 and the gasket 190. If the battery pack were to be used in the open air, condensation could occur due to changes in the external environment, such as temperature changes between room temperature and a low temperature and relative humidity changes between high humidity and low humidity, and moisture could flow into the space between the tab plate and the battery cell.

When a battery cell is left for a long time and used repeatedly, the crimping portion 124 of the battery cell and the tab plate may each react with the electrolyte. In addition, the moisture inflowing due to changes in the external environment may corrode the crimping portion 124 and the tab plate. As shown in FIG. 5, even when a tubing 200 surrounding the outer circumferential surface of the battery cell case is provided, corrosion may break through the tubing, causing a short circuit between the positive electrode and the negative electrode of the battery cell.

In contrast, referring to FIG. 5, according to example embodiments, the battery pack includes the tab plate 1100a that is in contact with the cap up 140 of the battery cell, e.g., with the terminal portion 141 of the cap up 140, and the battery pack includes the adhesive tape 300 located between the first battery cell 100a and the tab plate 1100a. The tab plate 1100a includes nickel.

According to an embodiment, the tab plate 1100a includes nickel in an amount of 95 wt% or more, based on 100 wt% of the tab plate 1100a. Compared to a tab plate including different types of metals (i.e., a tab plate including metals other than nickel or nickel in an amount less than 95 wt% based on 100 wt% of the tab plate), the tab plate 1100a including 95 wt% or more of nickel, based on 100 wt% of the tab plate 1100a, may significantly reduce corrosion by greatly reducing the inhibition of surface discoloration and oxidation due to the reaction with the electrolyte.

In this regard, experiments were performed by bringing a tab plate into contact with an electrolyte and moisture while changing the materials of the tab plate.

### <Experimental method>

(1) A tab plate including nickel (99 wt% of nickel), a tab plate coated with nickel and including iron (93 wt% of iron, 1 wt% of carbon, 1 wt% of manganese, and 5 wt% of nickel), a tab plate including copper (99 wt% of copper), and a tab plate coated with tin and including copper (99.7 wt% of copper and 0.3 wt% of tin) were prepared as tab plates.

(2) After completely immersing the tab plates in an electrolyte solution, changes in the tab plates were observed, and the results are summarized in Table 1 below.

In the electrolyte solution, ethylene carbonate (16.22 wt%), ethyl methyl carbonate (12.28 wt%) and dimethyl carbonate (39.22 wt%) were included as an electrolytic solvent, LiPF₆ (15.48 wt%) and LiTFSI (3.99 wt%) were included as an electrolyte, and other additives such as fluoroethylene carbonate, vinylene carbonate, adiponitrile, LiBF₄ and succinonitrile were included as the remainder.

(3) The tab plates were brought into contact with moisture while being brought into contact with the electrolyte solution according to step (2). For contact with moisture, water was input to a dropper, and 3 drops were intermittently added to the electrolyte solution. The results thereof are shown in Table 1 below.

**[Table 1]**

| | After immersion in electrolyte solution | After immersion in electrolyte solution and contact with moisture |
|---|---|---|
| Tab plate including nickel | Green discoloration occurred but disappeared after washing | Slight discoloration occurred due to the reaction between the electrolyte solution and moisture |
| Tab plate coated with nickel and including iron | After 15 days, corrosion occurred, and damage occurred upon contact | From Day 1, corrosion occurred continuously |
| Tab plate including copper | After 6 days, the surface color darkened and corrosion occurred | From Day 9, blue discoloration and corrosion occurred rapidly |
| Tab plate coated with tin and including copper | From Day 1, tin plating discoloration and corrosion occurred continuously | From Day 9, blue discoloration and corrosion occurred rapidly |

As shown in Table 1, the tab plate including nickel can significantly reduce the inhibition of surface discoloration and oxidation due to the reaction with the electrolyte solution. For example, the tab plate may include nickel in an amount of 95 wt% to 100 wt%, e.g., 99 wt% to 100 wt%.

The electrolyte solution may include, e.g., ethylene carbonate, ethyl methyl carbonate, and dimethyl carbonate, and at least one of LiPF₆, lithium bis(trifluoromethanesulfonyl)imide (LiTFSI), and LiBF₄ may be included as an electrolyte. For example, the electrolyte solution may include ethylene carbonate, ethyl methyl carbonate, and dimethyl carbonate in a weight ratio of 1:0.5 to 3:1 to 5. For example, the electrolyte solution may include the electrolyte in an amount of 10 wt% to 30 wt%, e.g., 10 wt% to 20 wt%. For example, the electrolyte solution may further include at least one of fluoroethylene carbonate, vinylene carbonate, adiponitrile, and succinonitrile.

The adhesive tape 300 applied to a battery cell that includes only a tab plate including nickel may significantly increase the effect of preventing corrosion of the tab plate of the battery pack due to the reaction between the residual electrolyte of the battery cell and moisture caused by condensation occurring when the external environment changes and preventing a short circuit between the battery cell and the tab plate of the battery pack. According to an embodiment, the adhesive tape may be impermeable to the electrolyte and moisture. The adhesive tape 300 is located between the battery cell and the tab plate 1100a, and may block the electrolyte from coming in contact with the tab plate via the crimping portion and may easily prevent moisture generated by condensation from coming in contact with the crimping portion via the tab plate.

The "impermeability" means that when the adhesive tape is completely immersed in an electrolyte or moisture and left for a predetermined period, e.g., 10 days, the weight change rate of the adhesive tape is less than 1%, e.g., 0% or more and less than 1%. The adhesive tape 300 that is impermeable to an electrolyte and moisture may be manufactured by any suitable method or commercially available products may be purchased and applied as the adhesive tape.

The adhesive tape 300 may be single-sided or double-sided adhesive tape. The double-sided adhesive tape may be stably fixed between the battery cell and the tab plate.

For example, the adhesive tape 300 may include a base layer and an adhesive layer formed on one side of the base layer. In another example, the adhesive tape 300 may include a base layer and an adhesive layer formed on both sides of the base layer. The base layer may be, e.g., a film that is made of a polymer and impermeable to an electrolyte and moisture. The adhesive layer imparts a predetermined adhesive force to the base layer, and may preferably include an adhesive resin that imparts a predetermined adhesive force to the tab plate, and/or the crimping portion, and/or the tubing described below.

The adhesive tape 300 may be adhered to the battery cell to surround the outer circumferential surface of the terminal portion of the battery cell, which may increase the effect of suppressing the penetration of an electrolyte into the battery cell from any direction and/or the penetration of moisture into the battery cell from any direction via the tab plate.

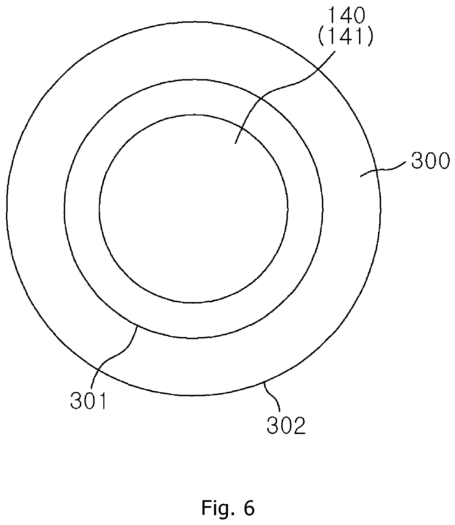

FIGS. 6 to 8 illustrate the outer shape of a battery cell including the adhesive tape 300 according to an embodiment of the present invention.

As shown in FIG. 6, the battery cell according to an embodiment of the present invention includes a ring-shaped adhesive tape 300, and the ring-shaped adhesive tape 300 may be adhered to the cap up 140 of the battery cell, e.g., to surround the outer circumferential surface of the terminal portion 141. The ring-shaped adhesive tape 300 may have an outer circumferential surface 302 and an inner circumferential surface 301, and may be a closed adhesive tape with no empty space between the outer circumferential surface 302 and the inner circumferential surface 301. For example, referring to FIG. 6, the adhesive tape 300 may be continuous around an entire perimeter of the terminal portion 141, as viewed in a top view (e.g., may be an O-ring tape). For example, referring to FIGS. 5-6, the adhesive tape 300 may be parallel to the tab plate 1100a, and may be positioned directly between (e.g., and in direct contact with) the tab plate 1100a and the tubing 200 surrounding the case of the battery cell.

For example, the inner circumferential surface 301 of the adhesive tape 300 may be located closer to the cap up 140, e.g., closer to the terminal portion 141, than to an outer end of the crimping portion 124. For example, the inner circumferential surface 301 of the adhesive tape 300 may be at least 5 mm away from the cap up 140, e.g., from the contact surface of the terminal portion 141 and the tab plate 1100a in a radial direction.

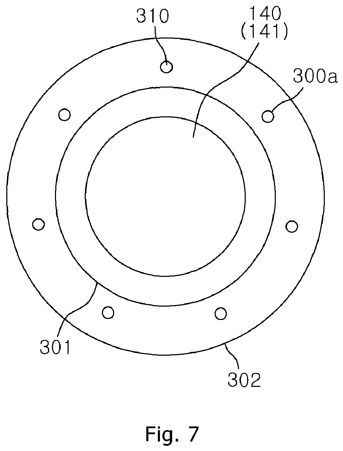

As shown in FIG. 7, the battery cell according to an embodiment of the present invention includes a ring-shaped tape 300a, and the ring-shaped tape 300a may be adhered to the cap up 140 of the battery cell, e.g., to the outer circumferential surface of the terminal portion 141. The ring-shaped tape 300a may have an outer circumferential surface 302 and an inner circumferential surface 301, and there may be a predetermined empty space 310 between the outer circumferential surface 302 and the inner circumferential surface 301.

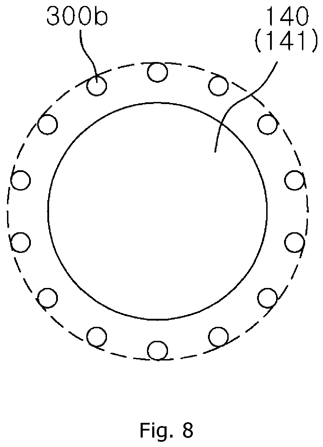

As shown in FIG. 8, the battery cell according to an embodiment of the present invention includes an adhesive tape 300b, which is an assembly of a plurality of dot-shaped adhesive tapes, and the adhesive tape 300b may be adhered at predetermined intervals to surround the cap up 140 of the battery cell, e.g., the outer circumferential surface of the terminal portion 141.

According to an embodiment of the present invention, the adhesive tape 300 may be interposed between the tab plate 1100a and the crimping portion 124. When the adhesive tape 300 is interposed between the tab plate 1100a and the crimping portion 124, it is possible to reduce the degree to which the electrolyte, which flows via (e.g., along a surface of) the crimping portion 124, comes in contact with the tab plate 1100a. For example, the inner circumferential surface 301 of the adhesive tape 300 may be located closer to the terminal portion 141 of the cap up 140 than to one end of the crimping portion. For example, referring to FIG. 5, the inner circumferential surface 301 of the adhesive tape 300 may be between the outer circumferential surface 302 of the adhesive tape 300 and an outer edge of the terminal portion 141 along the radial direction of the cap up 140.

The battery cell according to an embodiment of the present invention may further include a washer surrounding the cylindrical case.

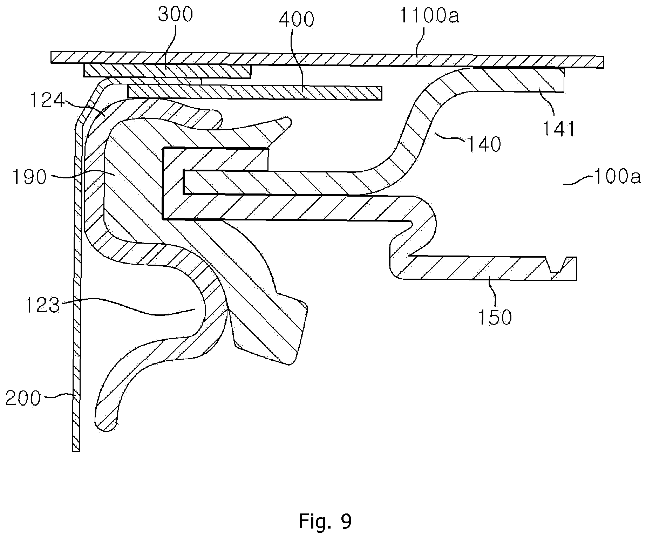

FIG. 9 is a partially enlarged cross-sectional view of the assembly of a battery cell and a tab plate in a battery pack according to another embodiment of the present invention.

As shown in FIG. 9, the battery pack according to another embodiment of the present invention includes the tab plate 1100a that is in contact with the cap up 140 of the battery cell, e.g., with the terminal portion 141 of the cap up 140, and the battery pack may include the adhesive tape 300 located between the first battery cell 100a and the tab plate 1100a.

The battery pack may further include a washer 400 surrounding the case. The washer 400 may be located between the crimping portion 124 and the tab plate 1100a and between the crimping portion 124 and the tubing 200.

Referring back to FIG. 5, the electrode assembly may include a first electrode, a separator, and a second electrode. For example, the first electrode may be a positive electrode, and the second electrode may be a negative electrode.

The positive electrode for a lithium secondary battery may include a current collector and a positive electrode active material layer formed on the current collector. The positive electrode active material layer includes a positive electrode active material and may further include a binder and/or a conductive material.

A compound capable of reversible intercalation and deintercalation of lithium (lithiated intercalation compound) may be used as a positive electrode active material. Specifically, one or more types of composite oxides of lithium and a metal, which is selected from cobalt, manganese, nickel and a combination thereof, may be used.

The composite oxide may be a lithium transition metal composite oxide, and specific examples may include a lithium nickel oxide, a lithium cobalt oxide, a lithium manganese oxide, a lithium iron phosphate compound, a cobalt-free nickel-manganese oxide, or a combination thereof.

As an example, a compound represented by any of the following chemical formulas may be used: LiₐA_{1-b}X_{b}O_{2-c}D'_{c} (0.90≤a≤1.8, 0≤b≤0.5, and 0≤c≤0.05); LiₐMn_{2-b}X_{b}O_{4-c}D'_{c} (0.90≤a≤1.8, 0≤b≤0.5, and 0≤c≤0.05); LiₐNi_{1-b-c}Co_{b}X_{c}O_{2-α}D'_{α} (0.90≤a≤1.8, 0≤b≤0.5, 0≤c≤0.5, and 0<α<2); LiₐNi_{1-b-c}Mn_{b}X_{c}O_{2-α}D'_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8).

In the above chemical formulas, A may be Ni, Co, Mn, or a combination thereof; X may be Al, Ni, Co, Mn, Cr, Fe, Mg, Sr, V, a rare earth element, or a combination thereof; D' may be O, F, S, P, or a combination thereof; G is Al, Cr, Mn, Fe, Mg, La, Ce, Sr, V, or a combination thereof; and L¹ may be Mn, Al, or a combination thereof.

The content of the positive electrode active material may be 90 wt% to 99.5 wt% based on 100 wt% of the positive electrode active material layer, and the content of the binder and the conductive material may each be 0.5 wt% to 5 wt% based on 100 wt% of the positive electrode active material layer.

Al may be used as the current collector.

The negative electrode for a lithium secondary battery includes a current collector and a negative electrode active material layer formed on the current collector. The negative electrode active material layer includes a negative electrode active material and may further include a binder and/or a conductive material.

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions is a carbon-based negative electrode active material and may include, e.g., crystalline carbon, amorphous carbon, or a combination thereof. Examples of the crystalline carbon may be graphite such as natural graphite or artificial graphite, and examples of the amorphous carbon may be soft carbon, hard carbon, mesophase pitch carbide, calcined coke, and so on.

An Si negative electrode active material or an Sn negative electrode active material may be used as the material capable of doping and dedoping lithium. The Si negative electrode active material may be silicon, a silicon-carbon composite, SiOₓ (0 < x < 2), an Si alloy, or a combination thereof.

The silicon-carbon composite may be a composite of silicon and amorphous carbon. According to an embodiment, the silicon-carbon composite may be in the form of silicon particles whose surfaces are coated with amorphous carbon.

The silicon-carbon composite may further include crystalline carbon. For example, the silicon-carbon composite may include a core containing crystalline carbon and silicon particles and an amorphous carbon coating layer located on the surface of the core.

For example, the negative electrode active material layer may include 90 wt% to 99 wt% of the negative electrode active material, 0.5 wt% to 5 wt% of the binder, and 0 wt% to 5 wt% of the conductive material.

The binder may be a non-aqueous binder, an aqueous binder, a dry binder, or a combination thereof. When an aqueous binder is used as the negative electrode binder, it may further include a cellulose-based compound capable of imparting viscosity.

The negative electrode current collector may be selected from copper foil, nickel foil, stainless steel foil, titanium foil, nickel foam, copper foam, a polymer substrate coated with a conductive metal, and combinations thereof.

The electrolyte for a lithium secondary battery includes a non-aqueous organic solvent and a lithium salt.

The non-aqueous organic solvent serves as a medium through which ions involved in the electrochemical reaction of the battery can move.

The non-aqueous organic solvent may be a carbonate-based, ester-based, etherbased, ketone-based, or alcohol-based solvent, an aprotic solvent, or a combination thereof, and may be used alone or in combination of two or more thereof.

In addition, when using a carbonate-based solvent, a mixture of a cyclic carbonate and a chain carbonate may be used.

Depending on the type of lithium secondary battery, a separator may be present between the positive electrode and the negative electrode. As the separator, polyethylene, polypropylene, polyvinylidene fluoride, or a multilayer film of two or more layers thereof may be used.

The separator may include a porous substrate and a coating layer including an organic material, an inorganic material, or a combination thereof located on one or both sides of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof.

The organic material and the inorganic material may be present as a mixture in one coating layer or in a form in which a coating layer including an organic material and a coating layer including an inorganic material are stacked.

The battery pack according to an embodiment of the present invention may be mounted in a vehicle. The vehicle may be, e.g., an electric vehicle, a hybrid vehicle, or a plug-in hybrid vehicle. The vehicle includes a four-wheeled vehicle or a two-wheeled vehicle.

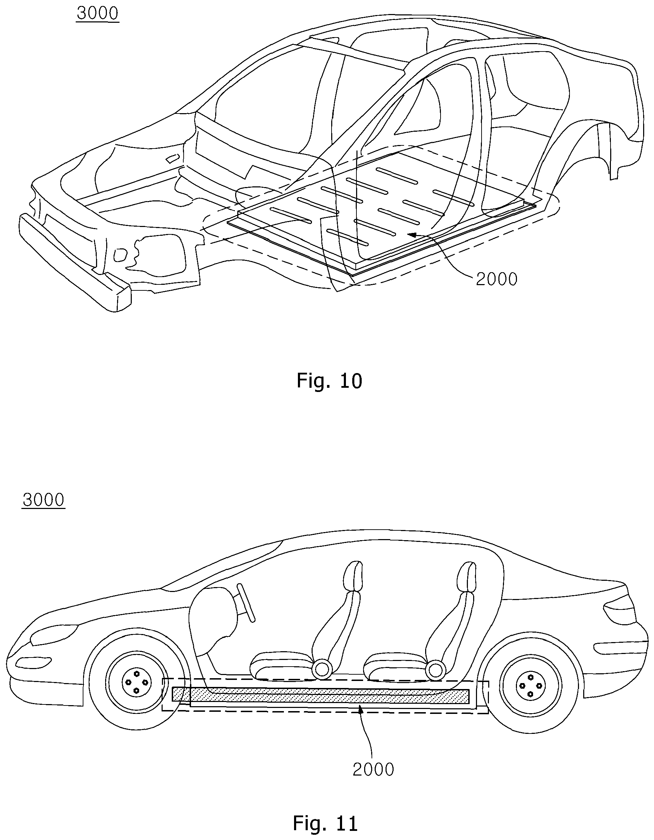

FIG. 10 is a diagram illustrating a vehicle body and vehicle body components according to an embodiment of the present invention. FIG. 11 is a diagram illustrating a vehicle body and vehicle body components according to an embodiment of the present invention.

A battery pack 2000 may be mounted in a vehicle 3000. The battery pack 2000 may be the battery pack illustrated in FIGS. 1 and 2. The vehicle 3000 may be, e.g., an electric vehicle, a hybrid vehicle, or a plug-in hybrid vehicle. The vehicle includes a four-wheeled vehicle or a two-wheeled vehicle.

The vehicle 3000 may include a battery module and/or the battery pack 2000 including the battery module according to an embodiment of the present invention. The vehicle 3000 operates by receiving power from the battery module and/or the battery pack 2000 including the battery module according to an embodiment of the present invention.

By way of summation and review, lithium secondary batteries can be greatly affected by the external environment. The external environment includes temperature changes from room temperature to a low temperature or humidity changes to a relatively high humidity. When a lithium secondary battery is used in the open air, rapid temperature changes may cause condensation on the surface of the lithium secondary battery or the surface of a battery pack including the lithium secondary battery, and thus moisture can penetrate into the lithium secondary battery or the battery pack. The penetration of moisture can cause corrosion of battery cells, short circuits between the positive electrode and the negative electrode of battery cells, and ignition.

Therefore, it may be desirable to provide a battery pack that prevents corrosion and short circuits by responding to changes in the external environment. As such, the present invention is directed to providing a battery pack that prevents corrosion of the tab plate of the battery pack due to the reaction of an electrolyte of a battery cell and moisture caused by condensation occurring when the external environment changes and prevents a short circuit between a positive electrode and a negative electrode of the battery cell.

According to the present invention, there is provided a battery pack that is resistant to the external environment by preventing corrosion of the tab plate of the battery pack due to the reaction of an electrolyte of a battery cell and moisture caused by condensation occurring when the external environment changes and preventing a short circuit between a positive electrode and a negative electrode of the battery cell.

## Claims

1. A battery pack (2000), comprising:
a battery cell (100a, 100b) including at least one terminal portion (100c, 100d, 141);
a battery case (1000) accommodating the battery cell (100a, 100b);
a tab plate (1100a, 1100b) in contact with the at least one terminal portion (100c, 100d, 141), the tab plate (1100a, 1100b) including nickel; and
an adhesive tape (300) between the tab plate (1100a, 1100b) and the battery cell (100a, 100b).

2. The battery pack (2000) according to claim 1, wherein the tab plate (1100a, 1100b) includes nickel in an amount of 95 wt% or more, based on 100 wt% of the tab plate (1100a, 1100b).

3. The battery pack (2000) according to claim 1 or 2, wherein the adhesive tape (300) is impermeable to an electrolyte and moisture.

4. The battery pack (2000) according to any of claims 1 to 3, wherein the adhesive tape (300) is a single-sided or double-sided adhesive tape (300), the adhesive tape (300) being attached to the battery cell (100a, 100b) and surrounding an outer circumferential surface of the terminal portion (100c, 100d), 141.

5. The battery pack (2000) according to any of claims 1 to 4, wherein the adhesive tape (300) is ring-shaped or dot-shaped.

6. The battery pack (2000) according to any of claims 1 to 5, wherein the battery cell (100a, 100b, 141) includes:
a cylindrical case (120) having a body portion (121), a bottom portion (122) connected to a first side of the body portion (121), a beading portion (123) bent toward the inside of the body portion (121), and a crimping portion (124) a second side of the body portion (121);
an electrode assembly (110) accommodated in the cylindrical case (120); and
a cap assembly (130) sealing the cylindrical case (120) at the second side of the body portion (121), the terminal portion (141) being at a top of the cap assembly (130).

7. The battery pack (2000) according to claim 6, wherein the adhesive tape (300) is between the tab plate (1100a, 1100b) and the crimping portion (124).

8. The battery pack (2000) according to claim 6 or 7, wherein the adhesive tape (300) is ring-shaped, an inner circumferential surface (301) of the adhesive tape (300) being closer to the terminal portion (141) than to one end of the crimping portion (124).

9. The battery pack (2000) according to any of claims 6 to 8, wherein an inner circumferential surface (301) of the adhesive tape (300) is at least 5 mm away from the terminal portion (141).

10. The battery pack (2000) according to any of claims 6 to 9, wherein the battery cell (100a, 100b) further includes a tubing (200) surrounding the cylindrical case (120), the adhesive tape (300) being between the tab plate (1100a, 1100b) and the tubing (200).

11. The battery pack (2000) according to claim 10, wherein one end of the tubing (200) is between one end of the crimping portion (124) and the tab plate (1100a, 1100b).

12. The battery pack (2000) according to claim 10 or 11, further comprising a washer (400) between the crimping portion (124) and the tubing (200).

13. The battery pack (2000) according to any of claims 6 to 12, wherein the cap assembly (130) includes a cap up (140) having the terminal portion (141), a safety vent (150) under the cap up (140), a cap down (170) under the safety vent (150), and a gasket (190) insulating the cylindrical case (120), one end of the gasket (190), which is far from the electrode assembly (110), being inclined upward.

14. The battery pack (2000) according to any of claims 1 to 13, wherein the battery cell (100a, 100b) includes an electrolyte, the electrolyte including at least one of ethylene carbonate, ethyl methyl carbonate, and dimethyl carbonate.
